# EUROPÄISCHE PATENTSCHRIFT

(11) **EP 0 244 686 B1**
(45) Veröffentlichungstag und Bekanntmachung des Hinweises auf die Patenterteilung: **20.01.1993**
(21) Anmeldenummer: 87105765.9
(22) Anmeldetag: 18.04.1987
(51) Int. Cl.: C09B 41/00, C09B 29/10

(54) **Verfahren zur Herstellung von Azopigmenten**
Process for the manufacture of azo pigments
Procédé de préparation de pigments azoiques

(30) Priorität: 03.05.1986 DE 3615099
(43) Veröffentlichungstag der Anmeldung: 11.11.1987
(73) Patentinhaber: HOECHST AKTIENGESELLSCHAFT, 65926 Frankfurt am Main (DE)
(72) Erfinder: Behringer, Hartmut, Dr., D-5042 Erftstadt (DE); Rehberg, Heinrich, Dr., D-5030 Hürth (DE)

(56) Entgegenhaltungen:
- DE-B- 1 085 278
- GB-A- 599 608
- GB-A- 1 143 727
- GB-A- 2 129 434
- US-A- 2 174 954
- US-A- 4 395 264

## Beschreibung

Azo-Pigmente werden bevorzugt durch eine Azokupplungsreaktion von Diazoniumverbindungen mit Kupplungskomponenten wie aromatischen Aminen, Acetessigsäurearyliden, Naphtholen, Phenolen oder Pyrazolonen hergestellt. Dies geschieht meist durch Zusammenmischen der Ausgangsstoffe in wäßriger Phase. Derartige Umsetzungen sind seit langem aus jedem Lehrbuch der organischen Chemie bekannt, vgl. z.B. Louis und Mary Fieser, Organische Chemie, Verlag Chemie, Weinheim/Bergstr. 1965, Seiten 890 ff., 1431, 1796 ff.

Besondere Probleme entstehen bei der Kupplung solcher Kupplungskomponenten, die im wäßrigen System schwerlöslich sind. Um solche Kupplungskomponenten zur Reaktion zu bringen, muß man für eine möglichst feine Verteilung der Kupplungskomponente sorgen. Dies geschieht durch Zugabe von Dispergiermitteln, Emulgatoren oder Lösemitteln, z.B. Alkoholen, durch Mahlung oder Ausfällung der Kupplungskomponenten, die in stark alkalischen Medien löslich sind und durch Zugabe von Säure gefällt werden können. Häufig führt die Schwerlöslichkeit der Kupplungskomponente zu Einschlüssen im gebildeten Pigment, wobei die Schwierigkeiten, reine Pigmente herzustellen, mit der Abnahme der Löslichkeit des Pigments im Reaktionssystem zunehmen.

Üblicherweise läßt man die im sauren pH-Bereich stabilere Diazoniumsalzlösung in die Lösung oder Suspension der Kupplungskomponente einlaufen, wobei die bei der Azokupplungsreaktion freigesetzte Säure und die in der Diazoniumsalzlösung vorhandene überschüssige Säure durch Zugabe von Basen neutralisiert wird, um einen gewünschten pH-wert einzuhalten. Da an der Einlaufstelle der sauren Diazoniumsalzlösung immer ein anderer pH-Wert herrscht als nach der vollkommenen Durchmischung, beeinflussen auch Rührertyp und Rührgeschwindigkeit die Nebenproduktbildung und damit die Coloristik des gewünschten Pigments. Zur Vermeidung von Nebenreaktionen wird stets darauf geachtet, daß in der Reaktionsmischung keine überschüssige Diazoniumverbindung nachzuweisen ist.

Die DE-B-10 85 278 beschreibt ein Verfahren zur Herstellung von Azopigmenten in pH-Bereichen, in denen die Azokomponente (= Kupplungskomponente) praktisch keine löslichen Salze bildet. Dabei führt man die Lösungen einer Diazoverbindung sowie einer Azokomponente gleichzeitig kontinuierlich einem Reaktionssystem zu, das bereits gekuppelte Farbstoffsuspension enthält. Die Zuführungsgeschwindigkeit der Komponenten wird so geregelt, daß die abfließende Farbstoffsuspension keine wesentlichen Anteile nicht umgesetzter Farbstoffkomponenten enthält.

Überraschenderweise wurde gefunden, daß reine Azopigmente ohne Einschluß nicht umgesetzter Kupplungskomponenten reproduzierbar erhalten werden können, wenn man äquivalente Mengen einer wäßrig-sauren Diazoniumsalzlösung mit einer wäßrig-alkalischen Lösung einer im wäßrig-neutralen bis wäßrig-sauren pH-Bereich schwerlöslichen Kupplungskomponente unter bestimmten Reaktionsbedingungen sehr rasch zusammenmischt. Als schwerlöslich sind Kupplungskomponenten anzusehen, deren Löslichkeit bei pH 7 kleiner als 0,1 Gew% ist.

Im einzelnen betrifft die Erfindung nunmehr ein Verfahren zur Herstellung von Azopigmenten durch Azokupplungsreaktion einer Diazokomponente mit der äquivalenten Menge einer im wäßrig-sauren und wäßrig-neutralen pH-Bereich unterhalb 65°C schwerlöslichen Kupplungskomponente, welches dadurch gekennzeichnet ist, daß man eine wäßrig-saure Lösung der Diazokomponente mit der wäßrig-alkalischen Lösung der Kupplungskomponente bei einer Temperatur von 10° bis 55°C in einer Zeitspanne von weniger als 6 Sekunden kontinuierlich mischt und durch Steuerung der Massenströme der Diazokomponente und der Kupplungskomponente in der Mischzone einen bestimmten pH-Wert zwischen 2 und 9 einstellt, wodurch 60 bis 98 % der Kupplungskomponente sofort zum gewünschten Azopigment umgesetzt werden, während gleichzeitig der Rest der Kupplungskomponente in einer freinkristallinen, reaktiven Form ausfällt, deren Teilchenoberfläche je nach ihrer chemischen Zusammensetzung Enolat-, Phenolat- oder Naphtholatgruppen trägt, und erst in einer Nachreaktionsphase mit noch nicht umgesetzter Diazokomponente zum gewünschten Azopigment umgesetzt wird.

Die Einstellung des bestimmten pH-Wertes kann durch Zufügung von Puffersubstanzen unterstützt werden.

Wie erwähnt, wird nach der kontinuierlichen Vermischung der Ausgangsstoffe ein pH-Wet zwischen 2 und 9 eingestellt. Eine weitere Eingrenzung dieses Bereichs ist produktspezifisch abhängig von der Diazokomponente und der Kupplungskomponente. Je stabiler die Diazokomponente und je geringer die Löslichkeit der Kupplungskomponente im neutralen pH-Bereich, desto höher darf bzw. muß der pH-Wert in den angegebenen Grenzen gewählt werden.

Erfindungsgemäß wird beim raschen Vermischen der Ausgangskomponenten ein Teil der schwerlöslichen Kupplungskomponente in einer reaktiven Form ausgefällt, die reaktionsfähiger ist als Partikel der reinen Kupplungskomponente. Die Oberfläche dieser gleichmäßig feinkristallinen Teilchen ist je nach der chemischen Natur der Kupplungskomponente mit Phenolat-, Enolat- oder Naphtholat-Gruppen besetzt, die eine Verschiebung der Elektronendichte innerhalb der kristallinen Partikel bewirken und dadurch eine besondere Reaktionsfähigkeit zur Folge haben. Beim Verfahren der Erfindung ist nach dem Vermischen der äquivalenten Ausgangskomponenten und nach dem Ausfällen eines Teiles der Kupplungskomponente in der reaktiven Form ein Überschuß an Diazokomponente vorhanden, der nach dem Stand der Technik als schädlich angesehen wurde. Es wurde jedoch überraschend gefunden, daß innerhalb des bereits angeführten, produktspezifisch gewählten pH- und Temperaturbereiches bei der erfindungsgemäß raschen Durchmischung von weniger als 6 Sekunden keine Zersetzung der Diazoniumkomponente über eine angemessene Zeitspanne von 0,01 - 1 Stunde eintritt, wobei diese Zeitspanne ausreichend groß ist, um in einer Nachreaktionsphase die vollständige Kupplung des in reaktiver Form ausgefällten Anteils der Kupplungskomponente zu ermöglichen. Diese Nachreaktionsphase dauert produktabhängig 0,01 bis 1 Stunde. Oft ist es vorteilhaft, durch Rückführung eines Teiles des aus der Mischvorrichtung austretenden Produktes die Durchmischung zu fördern und die Verweilzeit in der Mischvorrichtung zu steuern. Die Rückführung kann auch über ein Zwischengefäß erfolgen.

Zur Herstellung der Diazokomponente kann z.B. ausgegangen werden von 2,5-Dichloranilin; 2-Chlor-4-nitroanilin; 5-Nitro-2-aminoanisol oder 3-Nitro-4-aminotoluol. Als Kupplungskomponente kann z.B. eingesetzt werden: 2-Hydroxy-3-naphthoesäureanilid; β-Naphthol oder Acetessigsäure-o-anisidid.

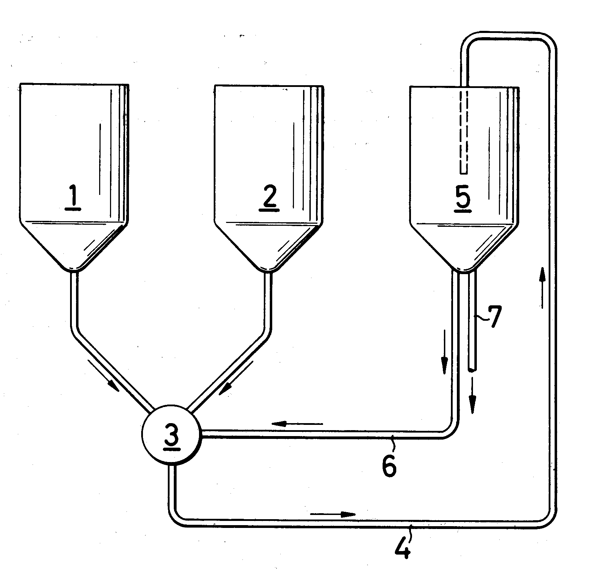

### Beispiel 1 (vgl. die Zeichnung)

Herstellung von 1-(2',5'-Dichlorphenylazo)-2-hydroxynaphthalin-3-carbonsäurephenylamid der Formel

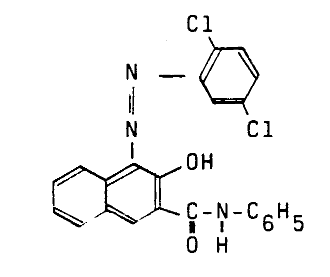

82,5 g (= 0,59 mol) 2,5-Dichloranilin der Formel 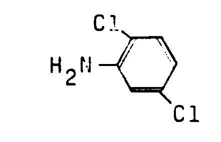
werden in 600 ml Wasser und 175 ml Salzsäure (31 Gew%) suspendiert, auf 2°C abgekühlt und mit 70 ml Natriumnitritlösung (40 Gew%) diazotiert. Anschließend werden 35 ml Essigsäure (60 Gew%) und 5 g® Celite (Kieselgur) und Aktivkohle als Filterhilfs- und Klärmittel zugegeben und die Mischung filtriert, wobei die Temperatur unterhalb 10°C gehalten wird. Die klare, durch Essigsäure puffernde Lösung von 2,5-Dichlorphenyldiazoniumchlorid wird im Behälter (1) mit Eis und Wasser auf 1,8 Liter aufgefüllt.

132,5 g (= 0,50 mol) 2-Hydroxy-3-naphthoesäureanilid der Formel 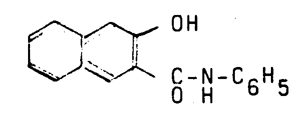
werden in 1400 ml Wasser in einem Behälter (2) suspendiert, mit 154 ml Natronlauge (25 Gew%) versetzt und unter Rühren erwärmt, bis eine klare Lösung entsteht, welche mit Wasser auf 1,8 Liter aufgefüllt und auf 55°C temperiert wird.

Die saure Diazoniumsalzlösung von etwa 2°C aus Behälter (1) und die alkalische Kupplungskomponentenlösung von 55°C aus Behälter (2) werden gleichzeitig innerhalb 1 Stunde bei 30 - 40°C in einen Mischer (3) und aus dessen Ablauf über Leitung (4) in einen Sammelbehälter (5) geführt, der bei Betriebsbeginn mit 250 ml Wasser befüllt wurde. Gleichzeitig wird aus dem Sammelbehälter (5) durch die Rücklaufleitung (6) in den Mischer (3) ein Hilfsstrom geleitet, dessen Menge das Fünffache der Volumina der beiden Ausgangskomponenten beträgt. Im Mischer (3) wird ein pH-Wert von 4,5 festgestellt, im Sammelbehälter (5) ein pH-Wert von 4,2. Im Mischer (3) beträgt die Verweilzeit 1,8 s. Der größere Teil (80 %) der gelösten Kupplungskomponente wird dabei sofort aus der Lösung heraus zum gewünschten Azopigment gekuppelt, während der Rest in einer feinkristallinen, reaktiven Form ausfällt und im Sammelbehälter (5), der in diesem Fall auch die Nachreaktionszone darstellt, mit dem restlichen Diazoniumsalz innerhalb von 30 min ebenfalls zum gewünschten Azopigment kuppelt, ohne daß in dieser Zeit eine störende Zersetzung der Diazokomponente auftritt.

Das aus dem Sammelbehälter (5) über Leitung (7) durch Filtration abgetrennte und getrocknete Azopigment (214 g = 0,49 mol) enthält keinen chromatographisch nachweisbaren Einschluß an Kupplungskomponente.

### Beispiel 2 (vgl. die Zeichnung)

Herstellung von 1-(2-Chlor-4-nitrophenylazo)-2-naphthol der Formel

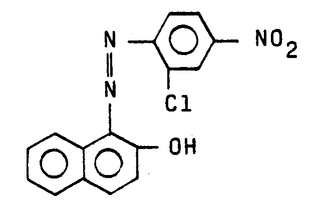

90 g (0,522 mol) 2-Chlor-4-nitroanilin werden in 500 ml Wasser und 126 ml Salzsäure (31 Gew%) suspendiert und unter Eiskühlung mit 69 ml Natriumnitritlösung (40 Gew%) diazotiert. Mit 5 g Filterhilfsmittel (Celite,Bleicherde) versetzt, wird der Ansatz filtriert, der Filterkuchen mit Eiswasser nachgewaschen und die klare Diazoniumsalzlösung im Behälter (1) auf 1500 ml gebracht.

75 g β-Naphthol (0,521 mol) werden mit 500 ml Wasser und 96 ml Natronlauge (25 Gew%) versetzt und bis zur Auflösung gerührt. Sodann wird die Lösung im Behälter (2) unter Rühren mit 10 ml Essigsäure (60 Gew%) als Puffersubstanz versetzt und mit Eiswasser auf 1500 ml aufgefüllt.

Die saure Diazoniumsalzlösung aus Behälter (1) und die alkalische Kupplungskomponentenlösung aus Behälter (2) werden gleichzeitig innerhalb von 90 Minuten bei 15 - 20°C in einen Mischer (3) und aus dessen Ablauf über die Leitung (4) in einen Sammelbehälter (5) geleitet, der bei Betriebsbeginn mit 500 ml Wasser befüllt wurde. Gleichzeitig wird aus dem Sammelbehälter (5) durch die Rücklaufleitung (6) ein Hilfsstrom von 200 l/h zum Mischer (3) zurückgeführt.

Im Mischer (3) wird ein pH-Wert von 2,6 festgestellt. Die Verweilzeit im Mischer (3) beträgt 1,5 s. Der größere Teil (90 %) der gelösten Kupplungskomponente wird im Mischer (3) zum gewünschten Azopigment gekuppelt, während der Rest in einer feinkristallinen, reaktiven Form ausfällt und im Sammelbehälter (5) der in diesem Fall auch die Nachreaktionszone darstellt, mit dem restlichen Diazoniumsalz zum gewünschten Azopigment innerhalb von 5 Minuten nachkuppelt.

Das aus dem Sammelbehälter (5) über Leitung (7) durch Filtration abgetrennte Azopigment ergibt nach dem Trocknen eine Menge von 164 g (0,5 mol). Es ist frei von störenden Verunreinigungen.

## Patentansprüche

1. Verfahren zur Herstellung von Azopigmenten durch Azokupplungsreaktion einer Diazokomponente mit der äquivalenten Menge einer im wäßrig-sauren und wäßrig-neutralen pH-Bereich unterhalb 65°C schwerlöslichen Kupplungskomponente, dadurch gekennzeichnet, daß man eine wäßrigsaure Lösung der Diazokomponente mit der wäßrig-alkalischen Lösung der Kupplungskomponente bei einer Temperatur von 10° bis 55°C in einer Zeitspanne von weniger als 6 Sekunden kontinuierlich mischt und durch Steuerung der Massenströme der Diazokomponente und der Kupplungskomponente in der Mischzone einen bestimmten pH-Wert zwischen 2 und 9 einstellt, wodurch 60 bis 98 % der Kupplungskomponente sofort zum gewünschten Azopigment umgesetzt werden, während gleichzeitig der Rest der Kupplungskomponente in einer feinkristallinen, reaktiven Form ausfällt, deren Teilchenoberfläche je nach ihrer chemischen Zusammensetzung Enolat-, Phenolat- oder Naphtholatgruppen trägt, und erst in einer Nachreaktionsphase mit noch nicht umgesetzter Diazokomponente zum gewünschten Azopigment umgesetzt wird.

2. Verfahren nach Anspruch 1, dadurch gekennzeichnet, daß die Einstellung des bestimmten pH-Werts durch Zufügung von Puffersubstanzen unterstützt wird.

## Claims

1. A process for the preparation of azo pigments by an azo coupling reaction of a diazo component with the equivalent amount of a coupling component which at 65°C is sparingly soluble in the aqueous acidic and aqueous neutral pH range, which comprises continuously mixing an aqueous acidic solution of the diazo component with the aqueous alkaline solution of the coupling component at a temperature of 10° to 55°C over a period of less than 6 seconds and adjusting the pH to a specific value of between 2 and 9 by controlling the mass flows of the diazo component and the coupling component in the mixing zone, as a result of which 60 to 98% of the coupling component immediately reacts to give the desired azo pigment, while the remainder of the coupling component simultaneously precipitates in a fine-crystalline, reactive form whose particle surface, depending on its chemical composition, carries enolate, phenolate or naphtholate groups, and reacts with as yet unconverted diazo component only in a post-reaction phase to give the desired azo pigment.

2. The process as claimed in claim 1, wherein the adjustment of the pH to the specific value is aided by the addition of buffer substances.

## Revendications

1. Procédé pour la fabrication de pigments azoïques par réaction de copulation azoïque d'un composant diazonium avec une quantité équivalente d'un composant de copulation peu soluble au-dessous de 65°C dans un domaine de pH aqueux-acide et aqueux-neutre, caractérisé en ce que l'on mélange en continu, à une température de 10 à 55°C, en une durée de moins de 6 s, une solution aqueuse acide du composé diazonium avec la solution aqueuse alcaline du composant de copulation et l'on ajuste dans la zone de mélange un pH déterminé entre 2 et 9 par réglage des courants en masse du composant diazonium et du composant de copulation, de sorte que 60 à 98 % du composant de copulation réagissent immédiatement en le composant azoïque désiré, tandis que le reste du composant de copulation précipite en même temps sous une forme réactive finement cristallisée dont la surface des particules porte, selon sa composition chimique, des groupes énolates, phénolates ou naphtolates et réagit seulement dans une phase de réaction ultérieure avec le composant diazonium n'ayant pas encore réagi en donnant le pigment azoïque désiré.

2. Procédé selon la revendication 1, caractérise, en ce que le réglage du pH déterminé est facilité par addition de substances tampons.
